# EUROPEAN PATENT SPECIFICATION

(11) **EP 0 305 074 B1**
(45) Date of publication and mention of the grant of the patent: **21.07.1993**
(21) Application number: 88307311.6
(22) Date of filing: 08.08.1988
(51) Int. Cl.: C09D 5/33, G02B 5/128

(54) **Retroreflective coating and composition for forming same**
Retroreflektierendes Überzugsmittel und Zusammensetzung zu seiner Herstellung
Revêtement rétroréfléchissant et composition pour l'obtenir

(30) Priority: 25.08.1987 US 89212
(43) Date of publication of application: 01.03.1989
(73) Proprietor: MINNESOTA MINING AND MANUFACTURING COMPANY, St. Paul, Minnesota 55133-3427 (US)
(72) Inventor: Bingham, Wallace Karl c/o Minnesota Mining, St. Paul Minnesota 55133-3427 (US)
(74) Representative: Baillie, Iain Cameron

(56) References cited:
- US-A- 3 251 704
- US-A- 3 700 305
- US-A- 4 263 345

## Description

This invention relates to a coating composition for application to a substrate to provide a retroreflective coating thereon, and also relates to a substrate coated with a retroreflective coating.

Liquid coating compositions that can be used to provide, in simple fashion, a retroreflective coating on a desired substrate such as a highway sign, or a piece of clothing are well known.

U.S. Patent No. 3,288,897 (Nellessen) discloses a coating composition comprising uncoated microspheres, metal flake pigment, and binder resin in a volatile liquid vehicle. The retroreflective coatings formed from such compositions typically tend to appear somewhat gray or metallic in color. U.S. Patent No. 3,835,087 (Searight et al.) discloses a related coating composition which differs in that nonmetallic flake particles having a mirror-like finish are employed in place of the metal flake pigment.

U.S. Patent No. 3,251,704 (Nellessen) discloses a coating composition comprising transparent microspheres that are hemispherically-reflectorized by being silvered or otherwise metal-plated, nonmetallic spheroidal pigment particles of specified size, and a binder resin in a volatile liquid vehicle. U.S. Patent No. 2,963,378 (Palmquist et al.) discloses a related coating composition. U.S. Patent No. 3,535,019 (Longlet et al.) discloses a related coating composition, described as being useful for forming retroreflective designs of intricate nature, wherein the hemispherical reflective layers are coated with a hemispherical protective barrier which prevents contact between the metal reflective layer and other components of the coating composition. Despite the presence of the pigment particles, the color of such retroreflective coatings typically tends to be undesirably influenced by the coating on the rear surfaces of the microspheres, e.g., coatings comprising microspheres that are coated with either aluminum or silver tend to have a grayish appearance that is aesthetically unappealing.

U.S. Patent No. 4,263,345 (Bingham) discloses coating compositions comprising a dilute coating vehicle and transparent microspheres that are hemispherically coated with specular reflective means that may be used to provide a retroreflective coating on a fabric but which are substantially inconspicuous in daylight and leave the garment with substantially its normal hand, feel, and breathability. The reference discloses that the specular reflective means may be metallic, e.g., vapor-coated aluminum, or dielectric coatings, such as taught in U.S. Patent No. 3,700,305 (Bingham), with vapor-coated aluminum being preferred. The reference teaches that the microspheres may comprise up to about one-third of the volume of the nonvolatile components of the coating composition, but that more typically the microspheres will comprise less than 20 percent by volume and preferably less than 15 percent by volume of the nonvolatile components of the coating composition to improve daytime or ambient inconspicuity. The retroreflective coatings produced from such compositions are taught to exhibit a retroreflective brightness of up to about 3 candelas per square meter per lux.

US 3,700,305 discloses a coating composition for forming a retroreflective coating on a substrate, said coating composition comprising: (1) a coating vehicle which comprises a film-forming binder material and a liquid volatilising agent, and (2) transparent microspheres substantially hemispherically coated with partially-light-transmissive specular reflectors.

US 3,700,305 also discloses a substrate having a retroreflective coating thereon, said retroreflective coating comprising transparent microspheres substantially hemispherically coated with partially-light-transmissive specular reflectors, said microspheres being adhered to said substrate with binder material.

The present invention provides a coating composition as disclosed in US 3,700,305, characterised in that said microspheres comprise between 35 and 75 percent by volume of the total nonvolatile portion of said coating composition, the proportions of said binder material, liquid volatilizing agent, and microspheres being such as to form a retroreflective coating containing multiple layers of microspheres over at least part of the area of said coating.

The invention also provides a substrate as disclosed in US 3,700,305, characterised in that said microspheres are present in an amount such as to provide multiple layers of microspheres over at least part of the area of said retroreflective coating whereby incident light can be cumulatively retroreflected by individual microspheres in different layers.

The coating compositions of the present invention may be applied to substantially porous as well as smooth, nonporous substrates. If desired the coating compositions provided herein may be pigmented to impart desired color, e.g., to meet aesthetic requirements for application of the coatings to apparel for decorative or safety purposes. The coating compositions provided herein may be applied to desired substrates such as fabrics, signs, etc. to form a retroreflective coating that has surprisingly high retroreflective brightness and truer, more aesthetically pleasing ambient color and appearance than was provided by retroreflective coatings formed from previously available coating compositions. The present invention may be used to form retroreflective coatings on a variety of substrates, including those that are curved or that are substantially flat, as well as flexible or inflexible substrates. Retroreflective coatings of the invention will typically have retroreflective brightnesses of at least 8 candelas per square meter per lux, and may have retroreflective brightnesses on the order of 20 to 40 candelas per square meter per lux.

The coating composition of the present invention may optionally include pigment particles; and viscosity-modifying agents, e.g., thickner(s). The coating composition may for example be made in thixotropic form and may be applied to a desired substrate via a number of conventional coating techniques. As used herein, "partially-light-transmissive specular reflector" is a specular reflector which permits the passage or transmission therethrough of at least some of the light which is incident thereto.

The retroreflective coatings provided herein may be formed on such substrates as fabric, articles of clothing, as well as on flat surfaces such as signs or walls, etc.

The retroreflective coatings provided by the invention have been found to exhibit unexpectedly bright, i.e., efficient, levels of retroreflection and wide angularity. This is believed to be the result of the cumulative manner in which the individual microspheres and their associated partially-light-transmissive reflectors cooperate to retroreflect surprisingly high amounts of incident light. Furthermore, the retroreflective coatings of the invention may be pigmented to desired color and have truer, more aesthetically appealing color and appearance than provided by retroreflective coatings disclosed in the prior art.

An embodiment of the invention will be further explained by way of example only with reference to the drawing, wherein:
Figure 1 is a cross-sectional illustration of a single microsphere which is hemispherically-coated with a partially-light-transmissive specular reflector; and
Figure 2 is a cross-sectional illustration of a portion of a retroreflective coating of the invention on a flat substrate.

These figures, which are not to scale, are idealized and intended to be merely illustrative and nonlimiting.

The novel retroreflective coatings of the present invention are formed from an easily-applied coating composition.

The proportions of the binder material, liquid volatilizing agent, microspheres, optional pigment particles, if any, and optional viscosity-modifying agent(s), if any, are such as to form a retroreflective coating containing multiple layers of microspheres over at least part of the area of the retroreflective coating.

The coating composition is in the form of a dispersion that may be coated on a desired substrate and allowed to dry. The liquid volatilizing agent serves to hold the other components of the coating composition in dispersion and facilitate the coating thereof. Upon application to the substrate, the liquid volatilizing agent should readily evaporate yielding the desired retroreflective coating. Thus the liquid volatilizing agent is preferably quick drying. It is important, however, that the liquid volatilizing agent does not tend to undesirably degrade the surface of the substrate, i.e., the liquid volatilizing agent should be compatible with the substrate.

In some instances it may be desired for the volatilizing agent to chemically attack the substrate so as to improve adhesion of the binder material or binder thereto. For instance, many water-soluble binder resins will not adhere to rubber or polyvinyl chloride surfaces such as found on rainwear unless the normally smooth surface is mildly etched to provide an interlocking action between the binder and surface.

The liquid volatilizing agent used herein is typically aqueous and may even be essentially water. Water typically offers the combined advantages of low cost, high compatibility with many substrates, low concern regarding pollution, and acceptable drying rates for most applications. Other liquids are contemplated for use as a volatilizing agent herein and will typically be used in combination with water when used as liquid volatilizing agents as taught herein. Examples of alternative solvents which may be useful in some embodiments include alcohols, esters, ketones, aromatic and aliphatic hydrocarbons, and petroleum distillates.

The binder is typically a resinous material that will form a substantially transparent, typically preferably colorless, film capable of binding the transparent microspheres and optional pigment particles to the substrate. Thus the binder preferably adheres well to the substrate, the microspheres and the hemispherical partially-light-transmissive specular reflectors thereon, and the optional pigment particles. Retroreflective coatings of the present invention may be formed on a variety of substrates, e.g., substrates made from one or more of the following materials: fabric, wood, metal, paper, or plastic, thus the binder in a specific embodiment of the coating composition should be selected accordingly. In some instances, adhesion of the binder to the microspheres and specular reflectors thereon may be improved by treating or priming the microspheres and/or the specular reflectors with an adhesion-promoting agent referred to herein as a coupling agent. The binder should be dissolvable or dispersible in the liquid volatilizing agent. Depending upon the particular application which is desired, other properties may be desired of the binder. For instance, if the retroreflective coating is to be applied to a piece of fabric that is used as an article of clothing, the film formed by the binder should preferably be flexible and durable as well as resistant to laundering or dry cleaning processes.

Examples of suitable binders include the following: polyester, polyvinyl acetate, polyvinyl chloride, polyacrylate, polyurethane, alkyd, epoxy, cellulose acetate butyrate, melamine-formaldehyde, urea-formaldehyde, nitrocellulose, plasticized polystyrene, a styrene-butadiene-based polymer, a vinyl chloride/vinylidene chloride copolymer, and a butadiene/acrylonitrile copolymer, or combinations thereof. Of these, polyurethane, polyacrylate, and polyvinyl chloride/acetate, or combinations thereof are typically preferred for use on fabrics because they tend to retain high flexibility and to provide the desired combination of high adhesion both to the other elements of the retroreflective coating and to the fabric substrate.

The microspheres which are used herein are preferably glass because of the high durability, transparency, and optical efficiency which such microspheres may typically exhibit. The microspheres will typically have an average diameter between 30 and 150 micrometres. Coatings made with microspheres substantially larger than this range may tend to be less flexible and supple than may be desired for a particular application, for instance, where the coating is to be formed on a piece of fabric or an article of apparel. Coatings made with microspheres substantially smaller than this range may tend to be less bright, i.e., provide less retroreflection, because of diffraction losses as the diameter of the microspheres approaches that of the wavelength of the the light being reflected. Preferably the average diameter of the microlenses is between 60 and 75 micrometres. Ideally the microspheres will be of substantially uniform diameters thereby enabling better control of formation of the desired retroreflective coating, and resulting in a coating which has substantially more uniform properties of brightness and appearance.

Microspheres having an index of refraction between 1.4 and 2.7 are useful in the present invention, with those having an index of refraction between 1.8 and 2.0 typically being preferred, and those having an index of refraction between 1.90 and 1.93 typically being more preferred, especially for coatings to be used in environments where the front surfaces of the microspheres will have an air interface. In those instances where the front surfaces of the microspheres are likely to be wet with water, the microspheres will preferably have a higher index of refraction, i.e., about 2.5. Accordingly, it may be desirable to utilize a mixture of microspheres having indices of refraction between 1.9 and 2.5 when preparing coating compositions of the invention for use on clothing such as rainwear or for surfaces that are to be used in potentially wet environments.

Each microsphere is "hemispherically" coated with a partially-light-transmissive specular reflector. "Hemispherically" is used herein to mean merely substantially hemispherically. The angularity of retroreflection for an individual microsphere is typically greatest when the microsphere is essentially hemispherically covered by the specular reflector. Retroreflective coatings comprising microspheres having substantially smaller or substantially larger specular reflectors thereon, while being useful for some applications, will tend to be less brightly retroreflective. Thus, the cumulative retroreflection provided by a layer of unoriented microspheres in a retroreflective coating is maximized when the microspheres are substantially hemispherically covered with specular reflectors such that the number of microspheres which are oriented so as to be capable of retroreflecting light at a given angle of incidence to the coating is maximized. The specular reflectors are typically preferably substantially colorless to minimize light absorption and maximize light reflection, as well as to minimize any unwanted effect upon the desired ambient color and appearance provided by the optional pigment particles described below.

The specular reflectors may be similar to the type disclosed in U.S. Patent No. 3,700,305 (Bingham).

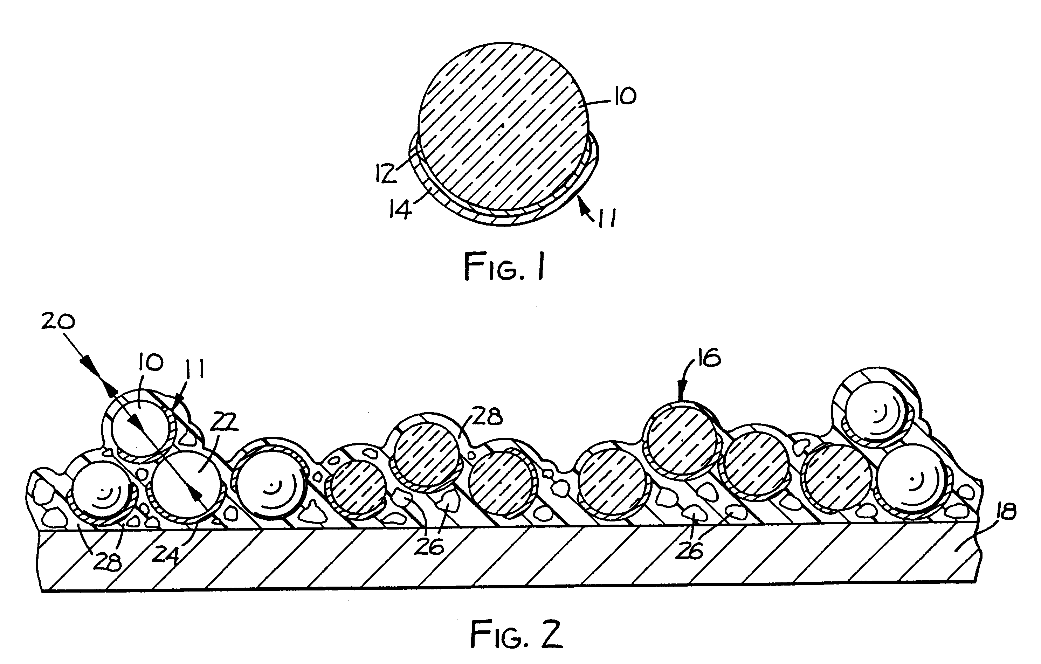

As shown in Figure 1, such partially-light-transmissive specular reflectors 11 may comprise one or more, typically two, succeeding layers 12, 14 of varying refractive index which are individually deposited on microsphere 10, typically via a vapor coating process. The layers of alternating refractive index are typically sequentially deposited directly upon, approximately hemispherically covering, the microspheres. The faces of layer 12, which has a refractive index of n₁, are in contact with layer 14 which has a refractive index of n₃ and microsphere 10 which has a refractive index of n₂. Both n₂ and n₃ are at least 0.1, and preferably at least 0.3, either higher or lower than n₁. When n₁ is higher than both n₂ and n₃, n₁ is preferably in the 1.7 to 4.9 range, and n₂ and n₃ are preferably in the 1.2 to 1.7 range. Conversely, when n₁ is lower than both n₂ and n₃, n₁ is preferably in the 1.2 to 1.7 range, and n₂ and n₃ are preferably in the 1.7 to 4.9 range. Preferably each layer 12, 14 of the specularly reflective mirror is essentially colorless to minimize light absorption and maximize light reflection, however, a great variety of visual effects may be achieved, if desired, when one or more of the layers are colored such as with a dye. Such coloring agent, if provided, preferably leaves the specular reflector substantially transparent.

Each of the layers of specular reflector 11 is preferably substantially transparent to enable that portion of the light incident to microsphere 10 which is not reflected by specular reflector 11 to pass through specular reflector 11 and potentially be reflected by another microsphere and specular reflector (not shown) which is disposed behind the first. This is shown in Figure 2 wherein some or all of that portion of incident light 20 which is not retroreflected by microsphere 10 and partially-light-transmissive specular reflector 11 may pass through to potentially be retroreflected by microsphere 22 and its associated specular reflector 24.

Examples of compounds within the desired refractive index ranges that may be used in partially-light-transmissive specular reflectors according to the invention include: high index materials such as CeO₂, Bi₂O₃, ZnS, and TiO₂; and low index materials such as CaF₂, MgF₂, Na₃Alf₆, and SiO₂.

Microspheres hemispherically-coated for use in the invention may be fabricated as follows. Transparent microspheres of suitable size and refractive index are embedded in a carrier sheet, e.g., polyethylene-coated paper, to a depth equal to between 15 and 50 percent of the average diameter of the microspheres, and preferably to between 20 and 40 percent of the average diameter of the microspheres. If the microspheres are not embedded sufficiently deeply in the carrier sheet, they may be prematurely dislodged from the carrier so as to interfere with efficient fabrication of sufficient quantities of coated microspheres. If the microspheres are embedded too deeply in the carrier, the partially-light-transmissive mirrors which are to be formed thereon may not cover sufficient portions of the surface of the microspheres, thereby reducing the brightness of the resultant retroreflective coating, and the microspheres may also tend to be difficult to remove from the carrier.

Partially-light-transmissive specular reflectors may then be formed on the surfaces of the microspheres which protrude from the carrier. The manner of forming such specular reflectors will be determined in part by the nature of the materials used therein. For instance, the specular reflectors disclosed in the aforementioned U.S. Patent 3,700,305 can be formed on the microspheres by sequential vacuum vapor deposition of the individual layers. Each transparent layer has an optical thickness (its actual thickness multiplied by its refractive index) corresponding to an odd-numbered multiple, i.e., 1, 3, 5, 7, . . ., of one-quarter wavelength of light in the wavelength range of the light which is to be retroreflected, i.e., typically in the range of about 380 to 1000 nanometres.

The preferred thickness of each layer may range from 25 nanometres to several hundred nanometres, depending upon which material is used to make the layer. For instance, for a layer of Na₃AlF₆, the preferred thickness is typically between 72.5 and 145 nanometres, whereas for a layer of ZnS, the preferred thickness is typically between 42.5 and 85 nanometres. The preferred compositions for the transparent specular reflectors for a particular application are determined by the optimum combination of refractive index, stability, cost, durability in the resultant coating, resistance to degradation by the liquid volatilizing agent(s), and retroreflective efficiency, and may be readily determined by trial and error. For instance, MgF₂ and CeO₂ are typically more durable and resistant to hydrolysis than Na₃AlF₆ and ZnS, respectively, but are also more expensive.

The optimum combination of retroreflective efficiency or brightness and cost is usually achieved with a specular reflector comprising two layers of alternating refractive index although three or more layers may be deposited to increase the resultant retroreflective efficiency which is achieved.

After application of the partially-light-transmissive specular reflectors to the microspheres, they may be removed from the carrier, such as by heating the carrier while shaking the microspheres loose or by scraping the carrier with a sharp knife or doctor blade.

The coating composition of the present invention will typically also comprise pigment particles of desired color. These particles are preferably substantially spheroidal or nodular in shape. Pigment particles of such shape will tend to slide off the exposed surfaces of the microspheres as the coating composition dries after being applied to a substrate, thereby leaving the microspheres substantially unobstructed for more effective retroreflection. The pigment particles will typically be between 4 and 50 µm in diameter, and preferably between 8 and 15 µm in diameter. The preferred size of the pigment particles is also related to the average size of the microspheres in that the pigment particles are preferably between one eighth and one quarter the size of the microspheres.

Pigments which may be used in coating compositions of the present invention may be chosen to provide a number of desired colors, including: white, such as may be provided by titanium dioxide, potassium titanate, calcium carbonate, zinc oxide, lead carbonate, antimony oxide, or dibasic or tribasic lead phosphosilicates; yellow, such as may be provided by lead chromate, zinc chromate, cadmium selenide, cadmium sulfide, lithopone, "Hansa" yellow, tetrachloroisoindolinone, or anthrapyrimidine; red, such as may be provided by cadmium selenide, cadmium selenide/barium sulfate mixtures, cadmium-mercury sulfide, calcium lithorubine, linear quinacridone; green, such as may be provided by chromium oxide, coprecipitates of lead chromate or sodium ferriferrocyanide, or chlorinated copper phthalocyanine; blue, such as may be provided by potassium ferriferrocyanide, copper phthalocyanine, ultramarine (alumino-silicate complex containing sulfur), dianisidine, or cobaltous aluminate; or black, such as may be provided by carbon black, ferric oxide, or certain compounds containing aniline.

Several useful types of pigment particles and a method for making the same in spherical form are disclosed in U.S. Patent No. 3,251,704 (Nellessen).

The coating composition may be made by mixing the ingredients thoroughly. A typically preferred manner of preparing the coating composition is as follows. First, the coating vehicle is prepared such as by combining the liquid volatilizing agents used, if a combination of such agents is to be employed, and adding the binder and other ingredients such as thickeners, antifoamants, antimicrobial agents, etc. and thoroughly mixing. The hemispherically-coated microspheres, previously prepared, such as in the manner described above, and previously prepared pigment particles are then treated with any desired surface treatments such as coupling agents and then added to the volatilizing agent and thorougly mixed therein. Preparation and thorough mixing of the coating vehicle prior to addition of the hemispherically-coated microspheres and pigment particles thereto is typically preferred because ingredients such as thickeners may be more easily uniformly mixed therethrough.

Good results have been achieved when the solids content (i.e., total of microspheres, including specular reflectors, optional pigment particles, and binder) of the coating composition is between 10 and 50 weight percent. Preferably the solids content is 22 to 28 weight percent as this typically provides an optimum combination of retroreflective brightness and facile coating properties. Control of the solids content is important to enable the liquid vehicle to drain away upon application to a desired substrate, leaving an efficient retroreflective coating thereon.

The coating composition is preferably thixotropic, i.e., having a viscosity of 10,000 to 30,000 at rest, and a viscosity of less than about 5000 mPas when stirred prior to coating on a substrate. It may be desired to add an effective amount of one or more thickeners to the coating vehicle to impart the desired viscosity to the coating composition. An example of such a thickener is CARBOPOL 940, a carboxypolymethylene resin available from B.F. Goodrich Chemical Group. Effective amounts of such agents for a particular application may be readily determined by trial and error.

The coating composition may be applied to a surface by a number of conventional coating techniques, including knife coating, bar coating, spray coating, etc. The coating composition provided herein may also be applied to a surface by such techniques as screen printing or stencilling to provide a decorative design thereon. The flow characteristics or rheology of the coating composition may be adjusted as desired for a particular application technique by selection and combination of liquid volatilizing agents and addition, if needed, of effective amounts of such agents as thickeners, rheology modifiers, etc. For instance, ACRYSOL ASE-60, an emulsion of ethyl methacrylate and acrylic acid copolymer available from Rohm and Haas Co., may be used as a rheology modifier to improve the screen printability of a coating composition of the invention. Effective amounts of such agents for a particular application may be readily determined by trial and error.

The coating vehicle should comprise at least 50 volume-percent of liquid volatilizing agent(s), preferably comprises between 60 and 85 volume percent thereof, and more preferably comprises about 70 volume percent thereof. Coating vehicles which comprise substantially more than 85 volume percent of the liquid volatilizing agent(s) may tend to contain too little binder to form an effective film to secure the microspheres to the substrate. Contrarily, coating compositions wherein the coating vehicle contains substantially less than 50 volume percent of liquid volatilizing agent(s) may not exhibit the desired microsphere drainage during drying such that pigment particles become lodged on the microspheres to thereby interfere with efficient retroreflection by the resultant coating.

The microspheres comprise between 35% and 75% by volume of the total nonvolatile portion of the coating composition, i.e., all the components of the composition (microspheres, optional pigment particles, binder, etc.) but for the liquid volatilizing agent(s). Retroreflective coatings formed from coating compositions wherein the microspheres comprise greater portions of the nonvolatile components will tend to offer more brilliant retroreflection but may be less durable because of the relatively lesser amounts of binder material available to form the anchoring film. Thus, in coating compositions of the invention, with reference to the total nonvolatile portions thereof, the hemispherically-coated microspheres comprise 35 to 75 volume percent, the optional pigment particles may for example comprise up to 40 volume percent, and the binder may for example comprise between 15 and 50 volume percent. Compositions comprising amounts of binder in the lower end of the indicated range will typically be useful for formation of retroreflective coatings on substantially nonporous substrates whereas compositions comprising amounts of binder in the higher end of the indicated range will typically be preferred for formation of retroreflective coatings on porous substrates. In the latter instance, sufficient binder material is present to flow into the openings of the porous surface, thereby providing a secure bond of the coating thereto, with sufficient amounts of binder remaining to form a film capable of binding the microspheres and optional pigment particles.

Coating compositions of the invention have been used to form retroreflective coatings exhibiting retroreflective brightnesses of 20 to 40 candelas per lux per square meter on fabric substrates. Figure 2 illustrates retroreflective coating 16 which has been formed on flat substrate 18 according to the invention. Retroreflective coating 16 comprises, in an amount such as to provide multiple layers of microspheres over at least part of the area of retroreflective coating 16, randomly oriented transparent microspheres, e.g., 10 and 22, which are hemispherically-coated with partially-light-transmissive specular reflectors, e.g., 11 and 24, respectively. The microspheres and pigment particles 26 are supported by binder film 28.

Retroreflective coatings of the invention have been found to exhibit unexpectedly high levels of retroreflection, as may be understood from the following comparisons. A closely-packed spread of microspheres was made by hemispherically coating microspheres with a layer of Na₃AlF₆ and a layer of ZnS, each layer being about one-quarter wavelength in optical thickness for light at a wavelength of about 590 nanometres, to form partially-light-transmissive specular reflectors as described above, then forming a binder layer around the microspheres and pulling the binder layer with microspheres partially embedded therein from the carrier. Thus the microspheres in the spread were essentially uniformly oriented in the same direction. A second closely packed spread was made with similar microspheres that had instead been hemispherically-coated with vapor-coated aluminum. The spread made with microspheres hemispherically-coated with vapor-coated aluminum was found to exhibit a retroreflective brightness of about 590 candelas per square meter per lux whereas the spread made with microspheres having partially-light-transmissive dielectric specular reflectors was found to exhibit a retroreflective brightness of only about 190 candelas per square meter per lux, i.e., the microspheres with dielectric specular reflectors exhibited only about 32 percent of the retroreflective brightness exhibited by the aluminum vapor-coated microspheres. However, when a retroreflective coating formed according to the invention from a composition containing microspheres having dielectric specular reflectors (as in Example 1 below) was compared with a coating formed from an otherwise identical composition wherein the microspheres were instead hemispherically-coated with vapor-coated aluminum, the former was found to exhibit a retroreflective brightness about 60 percent as high as that of the latter, i.e., about 23 candelas per square meter per lux compared to about 38 candelas per square meter per lux. Thus the retroreflective coating formed according to the present invention was found to exhibit nearly twice the expected retroreflective brightness. This unexpectedly high brightness is believed to result from the cumulative manner in which the individual microspheres and their associated partially-light-transmissive specular reflectors of the coating cooperate to retroreflect light incident thereto.

### Examples

The invention will now be further explained by the following illustrative examples which are intended to be nonlimiting. Unless otherwise indicated, all amounts are expressed in parts by weight. In each example, the retroreflective brightness of the resultant retroreflective coating was determined, according to ASTM E809, by measuring with a photoelectric cell the brightness of reflected light at an observation angle of 0.2° from the incident angles of a light beam of known brilliance. Unless otherwise indicated, the incident or entrance angle of the source light to the substrate was about 4° from normal to the substrate.

### Example 1

### Preparation of Microspheres with Specular Reflectors

Glass microspheres having a refractive index of about 1.93 and diameters between about 45 and 70 µm were cascaded in a monolayer onto a carrier sheet comprising a paper web coated on one side with low density polyethylene. The microspheres, which were packed in essentially their closest hexagonal arrangement, were embedded in the polyethylene to a depth of about 30 percent of their diameters by heating the carrier to 140°C (280°F). After cooling, the exposed sides of the microspheres were then vacuum vapor coated with Na₃AlF₆ to form a first dielectric layer having a refractive index of about 1.35 to 1.39, and then vacuum vapor coated with ZnS to form a second dielectric layer having a refractive index of about 2.35, both layers being about one-quarter wavelength in optical thickness for light at a wavelength of about 590 nanometres.

The carrier surface was then scraped with a sharp, straight-edged razor blade to dislodge the coated microspheres which were then collected.

### Preparation of Pigment

Spheroidal white pigment particles were obtained by spray drying the following formulation in a Nichols Spray Dryer equipped with a spinning disc atomizer:

| Component | Amount |
|---|---|
| S-35 Brand Sodium Silicate (Philadelphia Quartz Co.) | 150 |
| RF-30 HORSE HEAD Brand Rutile Titanium Dioxide (New Jersey Zinc Co.) | 100 |
| Water | 60 |

Drying was aided by heating the inlet air on the spray drier to about 140°C (280°F).

The dried white spheroidal particles were collected and mixed in a slurry comprising 4 parts pigment particles, 4 parts water, and 2 parts ammonium chloride. The slurry was stirred continuously for 2 hours. Following neutralization with NH₄Cl, the pigment particles were filtered, washed, dried, and screened through a 44 µm (325 mesh) U.S. Standard Screen.

### Preparation of Coating Composition

A first mixture of the following ingredients was prepared by continuously stirring while adding in sequence:

| Component | Amount |
|---|---|
| Water | 120 |
| Thickener-CARBOPOL 940 | 1.2 |
| Rheology Modifier-ACRYSOL ASE 60 | 0.8 |
| Ammonium Nitrate | 0.4 |
| Antifoamant-NOPCO DF 160L Antifoam (from Diamond Shamrock Co.) | 0.8 |
| Binder-RHOPLEX HA 8 Resin Emulsion (aqueous emulsion of 54 weight percent water and 46 weight percent ethyl acrylate/methylol acrylamide copolymer from Rohm and Haas) | 76.0 |
| Antimicrobial agent-DOWICIDE A (sodium salt of o-phenylphenol, from Dow Chemical Co.) | 0.2 |

A second mixture of the following was then prepared:

| Component | Amount |
|---|---|
| Pigment Particles (described above) | 60 |
| Water | 16 |
| Coupling agent-Z6040 (3-glycidoxypropyl-trimethoxysilane from Dow Corning) | 4 |
| Microspheres (described above) | 120 |

and then added to the first mixture. This thixotropic coating composition had a viscosity of about 13,500 mPas
when measured on a Brookfield viscometer using a No. 4 spindle at 30 rpm.

### Application of Coating Composition

The coating composition was screen printed through a No. 92T polyester monofilament screen using a 70 Shore A durometer squeegee onto a piece of 156g (5.5 ounce) 100 percent cotton twill. The coating composition exhibited good printability and printing characteristics. The resulting image was a pleasing white color and had a retroreflective brightness of about 23 candela per lux per square meter.

### Examples 2-8

Retroreflective coating compositions were prepared and tested as in Example 1, except instead of RF-30 HORSE HEAD Brand Rutile Titanium Dioxide, the pigment used was as follows:

| Example | Pigment | Ambient Color |
|---|---|---|
| 2 | X1899CP Light Chrome Yellow (from Imperial Pigment Co.) | Yellow |
| 3 | No. 112 Chrome Oxide Green (from 3M) | Green |
| 4 | RDC PONOLITH Blue Dispersion | Blue |
| 5 | 4RN PONOLITH Violet Fast Liquid (from DuPont) | Violet |
| 6 | Mixture of equal parts by weight of: YE 698-D Molybdate Orange (from DuPont), and X1899CP Light Chrome Yellow | Orange |
| 7 | Mixture of equal parts by weight of: RT759D Monastral Red Y (from DuPont), and YE 698-D Molybdate Orange | Red |
| 8 | 1255 RAVEN Carbon Black | Black |

### Examples 9-18

Retroreflective coating compositions were prepared and tested as in Example 1, except instead of the cotton twill used therein, the coating composition was applied to the fabrics indicated below:

| Example | Substrate | Brightness* |
|---|---|---|
| 9 | Cotton Twill (100 percent), bleached and desized | 19 |
| 10 | Cotton/polyester (35 percent/65 percent) Broadcloth | 14 |
| 11 | Woven Acrylic (100 percent) | 17 |
| 12 | Cotton Knit (100 percent) | 24 |
| 13 | Cotton/polyester Knit (50 percent/50 percent.) | 12 |
| 14 | Kraft Paper (60 pound), unbleached | 10 |
| 15 | TYVEK (from Dupont) | 12 |
| 16 | Canvas ((340g) (12 oz.)), white cotton | 15 |
| 17 | Polyester Woven (100 percent), light weight | 15 |
| 18 | Polyester/acetate (50 percent/50 percent) Fleece | 10 |

| | | |
|---|---|---|
| * Candela per lux per square meter | | |

## Claims

1. A coating composition for forming a retroreflective coating on a substrate, said coating composition comprising: (1) a coating vehicle which comprises a film-forming binder material and a liquid volatilizing agent, and (2) transparent microspheres substantially hemispherically coated with partially-light-transmissive specular reflectors, characterised in that said microspheres comprise between 35 and 75 percent by volume of the total nonvolatile portion of said coating composition, the proportions of said binder material, liquid volatilizing agent, and microspheres being such as to form a retroreflective coating containing multiple layers of microspheres over at least part of the area of said coating.

2. The composition of claim 1 further characterized in that said binder material comprises between 15 and 50 volume percent of the total nonvolatile portion of said coating composition.

3. The composition of any one of claims 1-2 wherein said binder material comprises at least one of the following: polyester, polyvinyl acetate, polyvinyl chloride, polyacrylate, polyurethane, alkyd, epoxy, cellulose acetate butyrate, melamine-formaldehyde, urea-formaldehyde, nitrocellulose, plasticized polystyrene, a styrene-butadiene-based polymer, a vinyl chloride/vinylidene chloride copolymer, a butadiene/acrylonitrile copolymer.

4. The composition of any one of claims 1-3 further characterized in that said liquid volatilizing agent comprises at least one of the following: water, alcohol, ester, ketone, aliphatic hydrocarbon, aromatic hydrocarbon, or petroleum distillate.

5. The composition of any one of claims 1-4 further characterized in that said composition comprises pigment particles, said pigment particles comprising up to 40 volume percent of the total nonvolatile portion of said coating composition.

6. The composition of any one of claims 1-5 further characterized in at least one of the following: said microspheres have an average diameter between 30 and 150 micrometres; or said microspheres have a refractive index between 1.4 and 2.7.

7. The composition of any one of claims 1-6 further characterized in that said partially-light-transmissive specular reflectors are adjacent to said microspheres and comprise a transparent layer of refractive index n₁, the faces of said layer being in contact with transparent materials of refractive index n₂ and n₃, both n₂ and n₃ being at least 0.1 either higher or lower than n₁, said transparent layer having an optical thickness corresponding to an odd numbered multiple of about one-quarter wavelength of light in the wave length range of 380 to 1000 nanometres.

8. The composition of claim 7 further characterized in that said specular reflectors comprise a plurality of transparent layers having successively alternating refractive indices of at least 0.1 difference.

9. The composition of claim 7 further characterized in that said specular reflectors comprise from two to seven layers adjacent to said microspheres.

10. The composition of any one of claims 1-9 further characterized in that said composition comprises at least one of the following: thickener, rheology modifier, or fungicide.

11. A retroreflective coating characterized in that said coating is formed from the coating composition of any one of claims 1-9.

12. A substrate having a retroreflective coating thereon, said retroreflective coating comprising transparent microspheres substantially hemispherically coated with partially-light-transmissive specular reflectors, said microspheres being adhered to said substrate with binder material, characterised in that said microspheres are present in an amount such as to provide multiple layers of microspheres over at least part of the area of said retroreflective coating whereby incident light can be cumulatively retroreflected by individual microspheres in different layers.

13. The substrate of claim 12 wherein said retroreflective coating further comprises pigment particles.

14. The substrate of claim 12 further characterized in that said binder material comprises at least one of the following: polyester, polyvinyl acetate, polyvinyl chloride, polyacrylate, polyurethane, alkyd, epoxy, cellulose acetate butyrate, melamine-formaldehyde, urea-formaldehyde, nitrocellulose, plasticized polystyrene, a styrene-butadiene-based polymer, a vinyl chloride/vinylidene chloride copolymer, a butadiene/acrylonitrile copolymer.

15. The substrate of any one of claims 12-14 further characterized in at least one of the following: said microspheres have an average diameter between 30 and 150 um (microns); or said microspheres have a refractive index between 1.4 and 2.7.

16. The substrate of any one of claims 12-15 further characterized in that said partially-light-transmissive specular reflectors are adjacent to said microspheres and comprise a transparent layer of refractive index n₁, the faces of said layer being in contact with transparent materials of refractive index n₂ and n₃, both n₂ and n₃ being at least 0.1 either higher or lower than n₁, said transparent layer having an optical thickness corresponding to an odd numbered multiple of about one-quarter wavelength of light in the wave length range of 380 to 1000 nanometres.

17. The substrate of claim 16 further characterized in that said specular reflectors comprise a plurality of transparent layers having successively alternating refractive indices of at least 0.1 difference.

18. The substrate of claim 16 further characterized in that said specular reflectors comprise from two to seven layers adjacent to said microspheres.

19. The substrate of any one of claims 12-18 further characterized in that said retroreflective coating has a retroreflective brightness of at least 8.0 candela/lux/square meter.

## Patentansprüche

1. Überzugszusammensetzung zum Herstellen eines rückstrahlfähigen Überzuges auf einem Substrat, wobei die Überzugszusammensetzung aufweist: (1) eine Trägersubstanz, die ein filmbildendes Bindemittel und eine verflüchtigbare Flüssinkeit und (2) durchsichtige Mikroperlen, die auf einer im wesentlichen halbkugeligen Fläche mit für Licht teildurchlässigen, spiegelnden Reflektoren überzogen sind, dadurch gekennzeichnet, daß die Gesamtmenge des nichtflüchtigen Anteils der Überzugszusammensetzung zu 35 bis 75 Vol.-% aus den Mikroperlen besteht und daß die Anteile des Bindemittels, der verflüchtigbaren Flüssigkeit und der Mikroperlen derart sind, daß auf mindestens einem Teil der Fläche des Überzuges ein rückstrahlfähiger Überzug mit einer Mehrzahl von Lagen von Mikroperlen gebildet wird.

2. Zusammensetzung nach Anspruch 1, dadurch gekennzeichnet, daß die Gesamtmenge des nichtflüchtigen Teils der Überzugszusammensetzung zu 15 bis 50 Vol.-% aus dem Bindemittel besteht.

3. Zusammensetzung nach Anspruch 1 oder 2, in dem das Rindemittel mindestens eine der folgenden Substanzen enthält: Polyester, Polyvinylacetat, Polyvinylchlorid, Polyacrylat, Polyurethan, Alkyd, Epoxid, Celluloseacetatbutyrat, Melamin-Formaldehyd, Harnstoff-Formaldehyd, Nitrocellulose, weichgemachtes Polystyrol, Styrol-Butadien-Polymer, Vinylchlorid-Vinylidenchlorid-Copolymer, Butadien-Acrylnitril-Copolymer.

4. Zusammensetzung nach einem der Ansprüche 1 bis 3, dadurch gekennzeichnet, daß die verflüchtigbare Flüssigkeit aus mindestens einer der folgenden Substanzen besteht: Wasser, Alkohol, Ester, Keton, aliphatischer Kohlenwasserstoff, aromatischer Kohlenwasserstoff oder Erdöldestillat.

5. Zusammensetzung nach einem der Ansprüche 1 bis 4, dadurch gekennzeichnet, daß die Zusammensetzung Pigmentteilchen enthält, die bis zu 40 Vol.-% des der Gesamtmenge des nichtflüchtigen Teils der Überzugszusammensetzung ausmachen.

6. Zusammensetzung nach einem der Ansprüche 1 bis 5, dadurch gekennzeichnet, daß mindestens eine der nachstehenden Bedingungen erfüllt ist: die Mikroperlen haben einen durchschnittlichen Durchmesser zwischen 30 und 150 Mikrometern; oder die Mikroperlen haben eine Brechzahl von zwischen 1,4 und 2,7.

7. Zusammensetzung nach einem der Ansprüche 1 bis 6, dadurch gekennzeichnet, daß die für Licht teildurchlässigen, spiegelnden Reflektoren den Mikroperlen benachbart sind und eine durchsichtige Schicht besitzen, die die Brechzahl n₁ hat und deren Flächen mit durchsichtigen Werkstoffen in Berührung stehen, die die Brechzahlen n₂ bzw. n₃ haben, die um mindestens 0,1 höher oder niedriger sind als n₁, wobei die durchsichtige Schicht eine optimale Dicke hat, die einem ungeradzahligen Vielfachen etwa einer Viertelwellenlänge des Lichts im Wellenlängenbereich von 380 bis 1000 nm entspricht.

8. Zusammensetzung nach Anspruch 7, dadurch gekennzeichnet, daß die spiegelnden Reflektoren eine Mehrzahl von durchsichtigen Schichten aufweisen, mit miteinander abwechselnde Bruchzahlen haben, die sich voneinander um mindestens 0,1 unterscheiden.

9. Zusammensetzung nach Anspruch 7, dadurch gekennzeichnet, daß die spiegelnden Reflektoren im Bereich der Mikroperlen zwei bis sieben Schichten besitzen.

10. Zusammensetzung nach einem der Ansprüche 2 bis 9, dadurch gekennzeichnet, daß die Zusammensetzung mindestens eine der folgenden Substanzen enthält: Verdickungsmittel, Fließfähigkeitsmodifikator oder Fungizid.

11. Rückstrahlfähiger Überzug, dadurch gekennzeichnet, daß der Überzug aus der Überzugszusammensetzung nach einem der Ansprüche 1 bis 9 hergestellt ist.

12. Substrat mit einem darauf vorgesehenen, rückstrahlfähigen Überzug, der durchsichtige Mikroperlen aufweist, die auf einer im wesentlichen halbkugeligen Fläche mit für Licht teildurchlässigen, spiegelnden Reflektoren überzogen sind und die durch ein Bindemittel mit dem Substrat verklebt sind, dadurch gekennzeichnet, daß die Mikroperlen in einer solchen Menge vorhanden sind, daß sie auf mindestens einem Teil der Fläche des rückstrahlfähigen Überzuges eine Mehrzahl von Lagen von Mikroperlen bilden, so daß einfallendes Licht durch einzelne Mikroperlen in verschiedenen Lagen kumulativ rückgestrahlt werden kann.

13. Substrat nach Anspruch 12, in dem der rückstrahlfähige Überzug ferner Pigmentteilchen enthält.

14. Substrat nach Anspruch 12, dadurch gekennzeichnet, daß das Bindemittel mindestens eine der folgenden Substanzen enthält: Polyester, Polyvinylacetat, Polyvinylchlorid, Polyacrylat, Polyurethan, Alkyd, Epoxid, Celluloseacetatbutyrat, Melamin-Formaldehyd, Harnstoff-Formaldehyd, Nitrocellulose, weichgemachtes Polystyrol, Styrol-Butadien-Polymer, Vinylchlorid-Vinylidenchlorid-Copolymer, Butadien-Acrylnitril-Copolymer.

15. Substrat nach einem der Ansprüche 12 bis 14, dadurch gekennzeichnet, daß mindestens eine der nachstehenden Bedingungen erfüllt ist: die Mikroperlen haben einen durchschnittlichen Durchmesser zwischen 30 und 150 Mikrometern; oder die Mikroperlen haben eine Brechzahl von zwischen 1,4 und 2,7.

16. Substrat nach einem der Ansprüche 12 bis 15, dadurch gekennzeichnet, daß die für Licht teildurchlässigen, spielnden Reflektoren den Mikroperlen benachbart sind und eine durchsichtige Schicht besitzen, die die Brechzahl n₁ hat und deren Flächen mit durchsichtigen Werkstoffen in Berührung stehen, die die Brechzahlen n₂ bzw. n₃ haben, die um mindestens 0,1 höher oder niedriger sind als n₁, wobei die durchsichtige Schicht eine optimale Dicke hat, die einem ungeradzahligen Vielfachen etwa einer Viertelwellenlänge des Lichts im Wellenlängenbereich von 380 bis 1000 nm entspricht.

17. Substrat nach Anspruch 16, dadurch gekennzeichnet, daß die spiegelnden Reflektoren eine Mehrzahl von durchsichtigen Schichten aufweisen, mit miteinander abwechsende Brechzahlen haben, die sich voneinander um mindestens 0,1 unterscheiden.

18. Substrat nach Anspruch 16, dadurch gekennzeichnet, daß die spiegelnden Reflektoren im Bereich der Mikroperlen zwei bis sieben Schichten besitzen.

19. Substrat nach einem der Ansprüche 12 bis 18, dadurch gekennzeichnet, daß der rückstrahlfähige Überzug eine Rückstrahlhelligkeit von mindestens 8,0 Candela/Lux/m² hat.

## Revendications

1. Composition de revêtement, servant à former un revêtement rétroréfléchissant sur un substrat, cette composition de revêtement comprenant : (1) un support de revêtement qui comprend un liant filmogène et un agent liquide se volatilisant et (2) des microsphères transparentes revêtues, pratiquement suivant une demi-sphère, de réflecteurs à poli spéculaire transmettant partiellement la lumière, caractérisée en ce que les microsphères constituent entre 35 et 75 % en volume de la partie non volatile totale de la composition de revêtement, les proportions du liant, de l'agent liquide se volatilisant et des microsphères étant telles qu'ils forment un revêtement rétroréfléchissant contenant des couches multiples de microsphères sur au moins une partie de l'étendue superficielle du revêtement.

2. Composition suivant la revendication 1, caractérisée en outre en ce que le liant constitue entre 15 et 50 % en volume de la partie non volatile totale de la composition de revêtement.

3. Composition suivant l'une quelconque des revendications 1 et 2, dans laquelle le liant comprend au moins l'un des éléments suivants : polyester, acétate de polyvinyle, chlorure de polyvinyle, polyacrylate, polyuréthanne, alkyde, époxy, acétate-butyrate de cellulose, mélamine-formaldéhyde, urée-formaldéhyde, nitrocellulose, polystyrène plastifié, polymère à base de styrène-butadiène, copolymère de chlorure de vinyle/chlorure de vinylidène et copolymère de butadiène/acrylonitrile.

4. Composition suivant l'une quelconque des revendications 1 à 3, caractérisée en outre en ce que l'agent liquide se volatilisant comprend au moins l'un des éléments suivants : eau, alcool, ester, cétone, hydrocarbure aliphatique, hydrocarbure aromatique ou distillat de pétrole.

5. Composition suivant l'une quelconque des revendications 1 à 4, caractérisée en outre en ce qu'elle comprend des particules de pigment, ces particules de pigment constituant jusqu'à 40 % en volume de la partie non volatile totale de la composition de revêtement.

6. Composition suivant l'une quelconque des revendications 1 à 5, caractérisée en outre par au moins l'une des deux particularités suivantes : les microsphères ont un diamètre moyen compris entre 30 et 150 micromètres, ou les microsphères ont un indice de réfraction compris entre 1,4 et 2,7.

7. Composition suivant l'une quelconque des revendications 1 à 6, caractérisée en outre en ce que les réflecteurs à poli spéculaire transmettant partiellement la lumière sont adjacents aux microsphères et comprennent une couche transparente ayant un indice de réfraction n₁, les faces de cette couche étant au contact de matières transparentes ayant des indices de réfraction n₂ et n₃, n₂ et n₃ étant l'un et l'autre soit supérieurs, soit inférieurs d'au moins 0,1 à n₁, la couche transparente ayant une épaisseur optique correspondant à un multiple impair d'environ un quart de longueur d'onde de lumière dans l'intervalle de longueurs d'ondes compris entre 380 et 1 000 nanomètres.

8. Composition suivant la revendication 7, caractérisée en outre en ce que les réflecteurs à poli spéculaire comprennent plusieurs couches transparentes ayant des indices de réfraction qui alternent d'une manière successive et dont la différence est au moins égale à 0,1.

9. Composition suivant la revendication 7, caractérisée en outre en ce que les réflecteurs à poli spéculaire comprennent de deux à sept couches adjacentes aux microsphères.

10. Composition suivant l'une quelconque des revendications 1 à 9, caractérisée en outre en ce que la composition comprend au moins l'un des éléments suivants : agent épaississant, agent modificateur de propriétés rhéologiques ou agent fongicide.

11. Revêtement rétroréfléchissant, caractérisé en ce que ce revêtement est formé d'une composition de revêtement suivant l'une quelconque des revendications 1 à 9.

12. Substrat, sur lequel un revêtement rétroréfléchissant est disposé, ce revêtement rétroréfléchissant comprenant des microsphères transparentes revêtues, pratiquement suivant une demi-sphère, de réflecteurs à poli spéculaire transmettant partiellement la lumière, un liant faisant adhérer les microsphères au substrat, caractérisé en ce que les microsphères sont présentes en une proportion permettant de fournir des couches multiples de microsphères sur au moins une partie de l'étendue superficielle du revêtement rétroréfléchissant, de sorte que la lumière incidente peut faire l'objet d'une rétroréflexion d'une manière cumulée de la part des différentes microsphères des différèntes couches.

13. Substrat suivant la revendication 12, dans lequel le revêtement rétroréfléchissant comprend en outre des particules de pigment.

14. Substrat suivant la revendication 12, caractérisé en outre en ce que le liant comprend au moins l'un des éléments suivants : polyester, acétate de polyvinyle, chlorure de polyvinyle, polyacrylate, polyuréthanne, alkyde, époxy, acétatebutyrate de cellulose, mélamine-formaldéhyde, urée-formaldéhyde, nitrocellulose, polystyrène plastifié, polymère à base de styrène-butadiène, copolymère de chlorure de vinyle/chlorure de vinylidène et copolymère de butadiène/acrylonitrile.

15. Substrat suivant l'une quelconque des revendications 12 à 14, caractérisé en outre par au moins l'une des deux particularités suivantes : les microsphères ont un diamètre moyen compris entre 30 et 150 µm (micromètres), ou les microsphères ont un indice de réfraction compris entre 1,4 et 2,7.

16. Substrat suivant l'une quelconque des revendications 12 à 15, caractérisé en outre en ce que les réflecteurs à poli spéculaire transmettant partiellement la lumière sont adjacents aux microsphères et comprennent une couche transparente ayant un indice de réfraction n₁, les faces de cette couche étant au contact de matières transparentes ayant des indices de réfraction n₂ et n₂, n₂ et n₃ étant l'un et l'autre soit supérieurs, soit inférieurs d'au moins 0,1 à n₁, la couche transparente ayant une épaisseur optique correspondant à un multiple impair d'environ un quart de longueur d'onde de lumière dans l'intervalle de longueurs d'ondes compris entre 380 et 1 000 nanomètres.

17. Substrat suivant la revendication 16, caractérisé en outre en ce que les réflecteurs à poli spéculaire comprennent plusieurs couches transparentes ayant des indices de réfraction qui alternent d'une manière successive et dont la différence est au moins égale à 0,1.

18. Substrat suivant la revendication 16, caractérisé en outre en ce que les réflecteurs à poli spéculaire comprennent de deux à sept couches adjacentes aux microsphères.

19. Substrat suivant l'une quelconque des revendications 12 à 18, caractérisé en outre en ce que le revêtement rétroréfléchissant a une brillance de rétroréflexion égale au moins à 8,0 candela/lux/mètre carré.
